# EUROPEAN PATENT SPECIFICATION

(11) **EP 2 806 071 B1**
(45) Date of publication and mention of the grant of the patent: **01.03.2017**
(21) Application number: 12865830.9
(22) Date of filing: 05.10.2012
(51) Int. Cl.: B60K 15/01, E02F 9/20, E02F 9/26, F02M 37/22, B60K 15/03

(54) **INDUSTRIAL MACHINE**
INDUSTRIEMASCHINE
MACHINE INDUSTRIELLE

(30) Priority: 16.01.2012 JP 2012006290
(43) Date of publication of application: 26.11.2014
(73) Proprietor: Hitachi Construction Machinery Co., Ltd., Bunkyo-ku Tokyo 112-8563 (JP)
(72) Inventor: ITOGA Kentaro, Tsuchiura-shi Ibaraki 300-0013 (JP); ARAI Yasushi, Tsuchiura-shi Ibaraki 300-0013 (JP)
(74) Representative: Beetz & Partner mbB
(86) International application number: PCT/JP2012/075979
(87) International publication number: WO 2013/108444

(56) References cited:
- JP-A- H0 560 025
- JP-A- 2011 021 517
- JP-U- H0 491 260
- JP-U- S63 138 467

## Description

### Technical Field

This invention relates to a working machine provided with a water separator for separating water contained in fuel and a water level detector for detecting a level of water separated by the water separator. A working machine as described in the preamble portion of claim 1 has been known from JP 4-91260 A.

### Background Art

In general, a working machine such as a hydraulic excavator is provided with a travel base, an upperstructure arranged above the travel base, a cab mounted on the upperstructure to house an operator, and a working attachment arranged on the upperstructure to perform work such as digging according to control by the operator in the cab. The above-mentioned upperstructure has an engine compartment disposed behind the cab, an engine accommodated in the engine compartment, a fuel tank for storing fuel, and a feed line connected to these engine and fuel tank to feed fuel to the engine.

The upperstructure also has a fuel pump arranged on the engine to draw fuel from the fuel tank into the feed line, and a return line for returning, into the fuel tank, fuel that has not been consumed in the engine and has become redundant. Accordingly, the fuel in the fuel tank is allowed to flow through the feed line by the fuel pump, is fed to the engine, and is consumed in the engine. On the other hand, the fuel which has not been consumed in the engine is allowed to flow back into the fuel tank through the return line.

Fuel may absorb water until it is fed to the engine while flowing through the feed line from the fuel tank, for example, because water contained in air inside the fuel tank and feed line may condense or rain water may enter the fuel tank. In such a case, the fuel tank and feed line become prone to oxidation and rusting with the water contained in the fuel, undesirably leading to a reduction in the service lives of the fuel tank and feed line. Moreover, if the feeding of fuel to the engine is continued with a large amount of water being contained therein, a potential problem arises in that the engine may stall, in other words, the fuel may become a cause of engine stalling or the fuel may undergo abnormal combustion to produce noise.

A working machine is, therefore, provided with a water separator that is formed at a part of the feed line to separate fuel, which is flowing through the feed line, and water, which is contained in the flowing fuel, from each other, and subsequent to the removal of the water from the fuel by the water separator, the fuel is fed to the engine. On the other hand, the water removed by the water separator is held within the water separator. As time goes on, the amount of water in the water separator increases so that the water separator reaches its full capacity. The working machine is, therefore, provided with a water level detector for detecting a level of water separated by the water separator, and also with a notification device for making a notification when the level of water as detected by the water level detector has reached a predetermined height. Upon receipt of the notification, an operator who performs a variety of maintenance work of the working machine drains water from the water separator to the outside.

Described specifically, as one of conventional technologies on such water separators, a fuel sedimenter that separates water by making use of a difference in specific gravity between water and fuel is known (see, for example, JP 4-91260 A). The fuel sedimenter according to this conventional technology is provided with a float, a guide and a switch. The float has a specific gravity set higher than fuel but lower than water such that the float is allowed to float at a boundary interface between the fuel and water in the water separator. The guide serves to guide the float in a vertical direction. The switch is closed by using the float when the level of water in the water separator has reached a predetermined height.

For example, this switch may be arranged inside the guide, and may be composed of a reed switch that two metal reeds are arranged at positions of the above-mentioned, predetermined height with a predetermined interval left therebetween, and a magnet is embedded in the float. When the amount of water in the water separator increases and the level of the water reaches the predetermined height, the magnet inside the float, which is floating at the boundary interface between the fuel and the water, comes close to one of the two metal reeds of the reed switch. Therefore, this one metal reed is magnetized so that the metal reeds attract each other. As a result, both the metal reeds come into contact with each other, thereby completing an electrical circuit. The water level detector receives an electrical signal flowed at this time, and detects the level of the water.

When the fuel sedimenter according to the conventional technology receives vibrations, the water level in the water separator varies or the float undergo microvibrations relative to the guide, and as a result, the float may move upward. To suppress this upward movement of the float, the fuel sedimenter according to the conventional technology is provided on a lower part of the guide with a steel ring. Owing to mutual attraction of the magnet in the float and the steel ring under magnetic force, the float is held at its lowermost position until the float receives a predetermined buoyant force.

JP 4-91260 A discloses a working machine provided with a water separator formed at a part of a feed line connected to an engine and a fuel tank to separate fuel, which is flowing through the feed line, and water, which is contained in the flowing fuel, from each other, a water level detector for detecting a level of water separated by the water separator, and a notification device for making a notification when the level of water as detected by the water level detector has reached a predetermined height.

### Disclosure of the Invention

### Problem to Be Solved by the Invention

In the fuel sedimenter according to the conventional technology as disclosed in JP 4-91260 A, the float is held at its lowermost position as mentioned above by the magnetic force which the magnet in the float receives from the steel ring. If the magnet in the float receives a vertically upward force greater than the magnetic force, for example, by a vibration, however, a potential problem arises in that before receiving the predetermined buoyant force, the float may move upward and the reed switch may be unnecessarily closed to cause malfunction of the notification device. Especially when the above-mentioned fuel sedimenter is arranged on a working machine such as a hydraulic excavator, there is a potential problem in that the notification device may frequently malfunction, because a whole body tends to receive large vibrations by impacts associated with work such as digging when the work is performed using the working machine. If the notification device develops such malfunction repeatedly, a concern arises in that, even when the operator is notified by the notification device of a time for drainage of water from the water separator, the operator immediately determines it to be malfunction based on his or her experience and does not drain the water from the water separator, and the reliability of the notification device is significantly impaired.

Further, the above-mentioned fuel sedimenter according to the conventional technology requires to periodically replace the steel ring arranged on the lower part of the guide, because the steel ring is soaked in water, corrosion such as rusting occurs, and the magnetic force applied to the magnet in the float becomes weaker. When desired to perform the replacement of the steel ring, the operator, therefore, has to attach a new steel ring to the lower part of the guide inside the water separator after detaching the old steel ring from the guide. This replacement work of the steel ring is irksome accordingly. With the foregoing in view, there is an outstanding desire for a working machine that enables to reduce such malfunction of the notification device even without the adding a new member such as a steel ring to the water separator.

In view of such an actual situation of the conventional technology, the present invention has as an object thereof the provision of a working machine that enables to appropriately become aware of a time for drainage of water from a water separator even without adding a new member into the water separator.

### Means for Solving the Problem

To achieve the above-described object, the present invention provides a working machine provided with a water separator formed at a part of a feed line connected to an engine and a fuel tank to separate fuel, which is flowing through the feed line, and water, which is contained in the flowing fuel, from each other, a water level detector for detecting a level of water separated by the water separator, and a notification device for making a notification when the level of water as detected by the water level detector has reached a predetermined height. The working machine is characterized by comprising an operation determination device for determining whether or not the working machine is in operation and a notification control device for performing control to disable a notifying function of the notification device when the working machine is determined to be in operation by the operation determination device but to enable the notifying function of the notification device when the working machine is determined to be out of operation by the operation determination device.

In the present invention configured as described above, when the working machine is operated, vibrations occur as a result of the operation so that the water separator in a body vibrates. At this time, the working machine is determined by the operation determination device to be in operation, and the notifying function of the notification device is disabled by the notification control device. It is, therefore, possible to prevent the notification device from malfunctioning even when the detection of the level of water in the water separator by the water level detector is affected by the vibrations of the water separator. As a consequence, the operator does not receive from the notification device any notification of a time for drainage of water from the water separator when the level of water in the water separator has not reached a predetermined height. It is, accordingly, possible to avoid the operator from recognizing, as malfunction, the notification from the notification device.

When the working machine becomes out of operation, on the other hand, vibrations of the water separator in the body subside so that the water level detector can detect the level of water in the water separator without receiving effects associated with such vibrations. As the working machine is determined by the operation determination device to be out of operation at this time, the notifying function of the notification device is enabled by the notification control device. The operator can, therefore, surely receive a notification of a time for drainage of water from the notification device when the level of water in the water separator has reached the predetermined height. By performing the control of the notifying function of the notification device by the notification control device on the basis of the state of operation of the working machine as determined by the operation determination device as described above, the operator can appropriately become aware of the time for drainage of water from the water separator even without adding a new member into the water separator.

The working machine according to the present invention is also characterized in that in the invention described above, the water level detector has a float having a specific gravity set higher than fuel but lower than water such that the float is allowed to float at a boundary interface between the fuel and water in the water separator, a guide for guiding the float in a vertical direction, and an output device for outputting a reach signal to the notification device from the float, which has been guided by the guide, as an origin when the level of water in the water separator has reached the predetermined height.

In the present invention configured as described above, the float which is allowed to float at the boundary interface between the fuel and water in the water separator is guided by the guide as the level of the water rises. When the level of the water in the water separator has reached the predetermined height, a reach signal is outputted from the float as the origin to the notification device. Upon receipt of this reach signal, the notification device can, therefore, notify the time for drainage of water from the water separator. Even when the float vibrates and rises relative to the guide as a result of vibrations of the body or the float rises due to a variation in the level of water in the water separator while the working machine is in operation, the notifying function of the notification device can, therefore, be performed with high accuracy because the notification control device performs control to disable the notifying function of the notification device and effects of the rise of the float as a result of the vibrations of the body can be lessened accordingly.

The working machine according to the present invention is also characterized in that in the invention described above, the working machine further comprises a key signal output device for outputting a key signal to enable a start-up of the engine, and an engine rpm measurement device for measuring an rpm of the engine; and the operation determination device determines the working machine to be in operation when the key signal has been outputted by the key signal output device and the rpm of the engine as measured by the engine rpm measurement device has increased beyond a predetermined value but determines the working machine to be out of operation when the key signal has been outputted by the key signal output device and the rpm of the engine has decreased to or beyond the predetermined value.

In the present invention configured as described above, when the working machine is in operation, the working machine is performing work so that a load is applied to the engine and the rpm of the engine increases to a larger value. When the working machine is out of operation, on the other hand, the engine is in either shut-down state or an idle state so that the rpm of the engine decreases. The operation determination device can, therefore, make a reasonable determination as to the state of operation of the working machine, including the idle state of the engine, by comparing the rpm of the engine as measured by the engine rpm measurement device with the predetermined value after a key signal has been outputted by the key signal output device.

The working machine according to the present invention is also characterized in that in the invention described above, the working machine further comprises a working attachment, and a control lever for controlling the working attachment; and the operation determination device has a control lever state detection device for detecting a state of the control lever, and determines the working machine to be in operation when a neutral state of the control lever is not detected by the control lever state detection device but determines the working machine to be out of operation when the neutral state of the control lever is detected by the control lever state detection device.

In the present invention configured as described above, when the neutral state of the control lever is not detected by the control lever state detection device, the operator can be presumed to be performing work with the working attachment by manipulating the control lever. The working machine can, therefore, be determined to be in operation. When the neutral state of the control lever is detected by the control lever state detection device, on the other hand, the operator is not controlling the control lever so that the working machine can be determined to be out of operation. Accordingly, the operation determination device can easily specify the state of operation of the working machine by detecting the state of control of the control lever with the control lever state detection device as described above.

The working machine according to the present invention is also characterized in that in the invention described above, the working machine further comprises a working attachment, a control lever for controlling the working attachment, and a lock lever for disabling a function of the control lever; and the operation determination device has a lock lever state detection device for detecting a state of the lock lever, and determines the working machine to be in operation when a locking state of the lock lever is not detected by the lock lever state detection device but determines the working machine to be out of operation when the locking state of the lock lever is detected by the lock lever state detection device.

In the present invention configured as described above, when the locking state of the lock lever is not detected by the lock lever state detection device, the operator can be presumed to be performing work with the working attachment by manipulating the control lever. The working machine can, therefore, be determined to be in operation. When the locking state of the lock lever is detected by the lock lever state detection device, on the other hand, the working machine can be determined to be out of operation because the function of the control lever has been disabled and the working machine is not brought into operation even when the operator manipulates the control lever. Accordingly, the operation determination device can easily specify the state of operation of the working machine by detecting the existence or non-existence of the locking state of the lock lever with the lock lever state detection device as described above.

### Advantageous Effects of the Invention

The working machine according to the present invention is provided with the notification device for making a notification when the level of water in the water separator as detected by the water level detector has reached the predetermined height. By performing the control of the notifying function of the notification device with the notification control device on the basis of the state of operation of the working machine as determined by the operation determination device, the notification device can be prevented from malfunctioning under the effects of vibrations associated with operation of the working machine. Therefore, the operator can appropriately become aware of the time for drainage of water from the water separator even without adding a new member into the water separator. As a consequence, the notification device can be assured to have higher reliability than before.

### Brief Description of the Drawings

FIG. 1 is a view depicting the configuration of a first embodiment of the working machine according to the present invention.

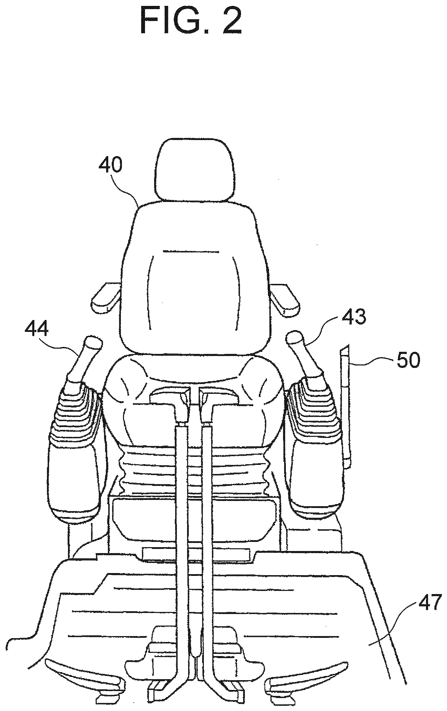

FIG. 2 is a view illustrating the configuration of an interior of a cab depicted in FIG. 1.
FIG. 3 is a view showing the configuration of a water separator and water level detector arranged in the first embodiment of the present invention.
FIG. 4 is a block diagram illustrating control by an operation determination device and notification control device arranged in the first embodiment of the present invention.
FIG. 5 is a flow chart illustrating operation of the first embodiment of the present invention.
FIG. 6 is a flow chart illustrating operation of a second embodiment of the present invention.
FIG. 7 is a flow chart illustrating operation of a third embodiment of the present invention.

### Modes for Carrying out the Invention

Certain modes for carrying out the working machine according to the present invention will hereinafter be described based on the drawings.

### First Embodiment

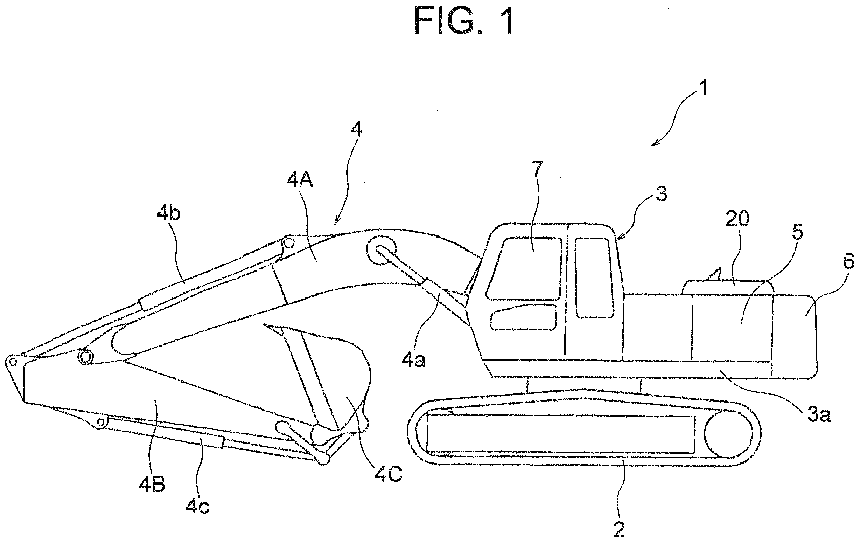

The first embodiment of the working machine according to the present invention is, for example, a hydraulic excavator 1 as depicted in FIG. 1. This hydraulic excavator 1 is provided with a travel base 2, an upperstructure 3 arranged on an upper side of the travel base 2 and having a swing frame 3a, and a working attachment arranged on the upperstructure 3 to perform work such as digging, for example, a front working device 4 attached to a front part of the upperstructure 3 and tiltable in an up-and-down direction.

This front working device 4 is constructed, for example, of a boom 4A tiltably attached at a basal end thereof on the upperstructure 3 and tiltable in the up-and-down direction, an arm 4B pivotally attached to a free end of this boom 4A, and a bucket 4C pivotally attached to a free end of this arm 4B. The upperstructure 3 is provided on a front section thereof with a cab 7, and is provided on a rear section thereof with a counterweight 6. Further, the upperstructure 3 is provided with an engine compartment 5 between these cab 7 and counterweight 6, and is also provided with a body cover 20 arranged on an upper part of the engine compartment 5 and forming an exterior.

Although not depicted in the drawing, the upperstructure 3 has an engine accommodated in the engine compartment 5, a starter for starting up the engine, a fuel tank arranged forward of the engine to store fuel, and a feed line connected to these engine and fuel tank to feed fuel to the engine. In addition, the upperstructure 3 also has a fuel pump arranged on the engine to draw fuel from the fuel tank into the feed line, and a return line for returning, to the fuel tank, fuel that has not been consumed in the engine and has become redundant.

Still further, the upperstructure 3 also has a hydraulic oil tank for storing hydraulic oil therein, and a hydraulic pump drivable by the engine to draw hydraulic oil from the hydraulic oil tank and to deliver it as pressure oil to the front working device 4. The upperstructure 3 also has control valves for controlling a flow of pressure oil, which has been delivered from the hydraulic pump, according to operation of the below-described control levers arranged in the cab 7, and actuators driven by pressure oil fed from the control valves.

As depicted in FIG. 1, these actuators include a boom cylinder 4a, an arm cylinder 4b, and a bucket cylinder 4c. The boom cylinder 4a connects the upperstructure 3 and boom 4A together, and is extendable and retractable to tilt the boom 4A. The arm cylinder 4b is arranged on an upper side of the boom 4A, connects the boom 4A and arm 4B together, and is extendable and retractable to pivot the arm 4B. The bucket cylinder 4c connects the arm 4B and bucket 4C together, and is extendable and retractable to pivot the bucket 4C.

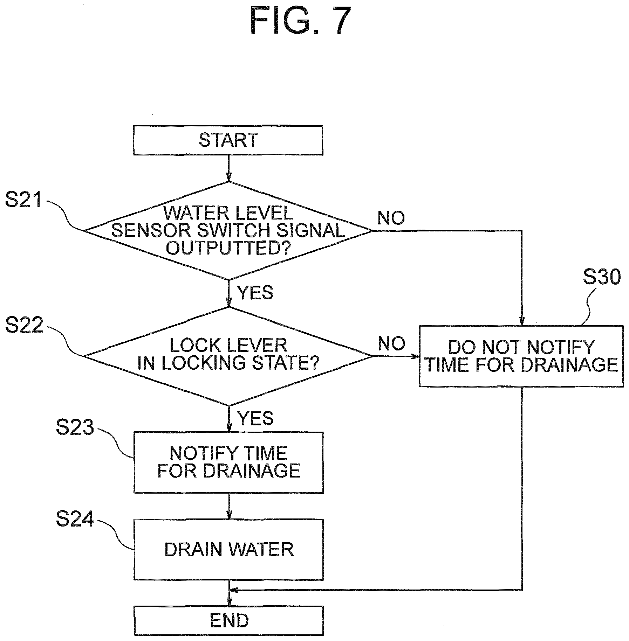

As illustrated by way of example in FIG. 7, the cab 7 has a floor section 47, an operator's seat 40 secured on a rear part of the floor section 46 to permit sitting of the operator therein, a pair of control levers 43,44 arranged on opposite sides of the operator's seat 40 to control the front working device 4, and a lock lever 50 attached pivotally in an up-and-down direction in a vicinity of the left-side control lever 43 out of the control levers 43,44 to disable functions of the control levers 43,44.

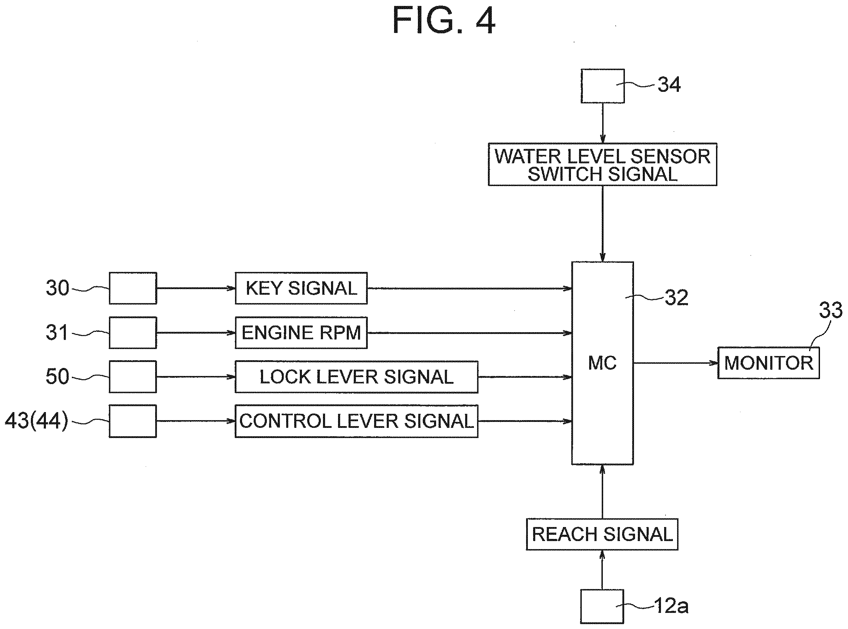

As illustrated in FIG. 4, the upperstructure 3 is also provided with a key signal output device 30 for outputting a key signal to enable a start-up of the engine, an engine rpm measurement device 31 for measuring an rpm of the engine, and a main controller (MC) 32 for performing various computations based on signals outputted by these key signal output device 30 and engine rpm measurement device 31 to electrically control the engine, control valves and the like. The cab 7 is provided with an input key connected to the main controller 32 to start up or shut down the engine. The operator manipulates this input key to switch on or switch off the key signal output device 30 and starter.

Accordingly, unless a key signal is received from the key signal output device 30, the main controller 32 does not start up the engine even when the starter is switched on. When the starter is switched on after reception of a key signal from the key signal output device 30, the main controller 32 starts up the engine. At this time, the measurement of an rpm of the engine is started by the engine rpm measurement device 31, and information on the rpm of the engine is transmitted to the main controller 32.

The control levers 43,44 and lock lever 50 are connected to the main controller 32. When the lock lever 50 is pivoted in an upward direction, the lock lever 50 is brought to a locking state to lock manipulations of the control levers 43,44, and the main controller 32 performs control to cut off the feeding of pressure oil to the boom cylinder 4a, arm cylinder 4b and bucket cylinder 4c. When the lock lever 50 is pivoted in a downward direction, on the other hand, the locked states of the control levers 43,44 are cancelled, and the main controller 32 performs control to enable the feeding of pressure oil to the boom cylinder 4a, arm cylinder 4b and bucket cylinder 4c.

When the lock lever 50 is pivoted from the upward direction to the downward direction, and subsequent to the cancellation of the locking state, the control levers 43,44 are manipulated, the control valves control the pressure oil, which is to be delivered to the boom cylinder 4a, arm cylinder 4b and bucket cylinder 4c, respectively, according to the manipulation of the control levers 43,44. The boom cylinder 4a, arm cylinder 4b and bucket cylinder 4c either extend or retract according to the feed amounts of the pressure oil as controlled by the corresponding control valves, whereby the boom 4A, arm 4B and bucket 4C perform tilt or pivotal operation corresponding to the manipulation of the control levers 43,44.

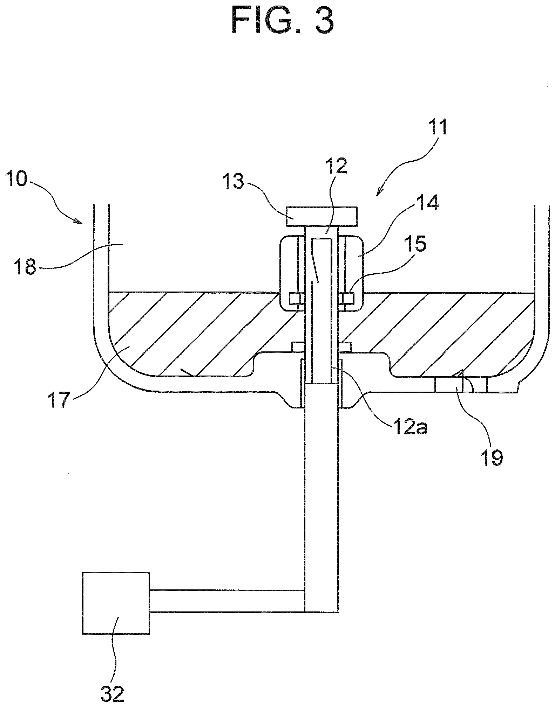

As shown in FIG. 3, the first embodiment of the present invention is provided with a water separator 10, a water level detector 11, and a notification device. The water separator 10 is formed at a part of the feed line that connects the engine and fuel tank together, and separates fuel 18, which is flowing through the feed line, and water 17, which is contained in the flowing fuel 18, from each other. The water level detector 11 detects a level of the water 17 separated by the water separator 10. The notification device makes a notification when the level of the water 17 as detected by the water level detector 11 has reached a predetermined height.

Described specifically, as illustrated by way of example in FIG. 4, the cab 7 has a monitor 33 for displaying various information including, for example, an operation state of the engine and a residual quantity of the fuel 18 in the fuel tank, and the above-mentioned notification device is integrated in the main controller 32, and displays on the monitor 33 a notification that urges to drain the water 17 from the water separator 10, namely, a notification of drainage. It is to be noted that in a lower part of the water separator 10, a drain groove 19 is arranged openably and closably such that the thus-held water 17 can be drained to the outside.

As shown in FIG. 3, the above-mentioned water level detector 11 has a float 14, a guide 12, a stopper 13, and an output device. The float 14 has a specific gravity set higher than the fuel 18 but lower than the water 17 such that the float 14 is allowed to float at a boundary interface between the fuel 18 and water 17 in the water separator 10. The guide 12 serves to guide the float 14 in a vertical direction. The stopper 13 provides an upper limit to a movement of the float 14 in the vertical and upward direction as guided by the guide 12. The output device outputs a reach signal to the notification device from the float 14, which has been guided by the guide 12, as an origin when the level of water 17 in the water separator 10 has reached the predetermined height.

This output device is composed, for example, of a reed switch 12 and a magnet 15. The reed switch 12 includes two metal reeds arranged at positions of the above-mentioned, predetermined height with a predetermined interval left therebetween, and the magnet 15 is embedded inside the float 14. When the water separator 10 separates the water 17 contained in the fuel 18 and holds it therein, the amount of the water 17 in the water separator 10 increases and the level of the water 17 reaches the predetermined height, the magnet 15 inside the float 14, which is floating at the boundary interface between the fuel 18 and the water 17, comes close to one of the two metal reeds of the reed switch 12a. Therefore, this one metal reed is magnetized so that the metal reeds attract each other. As a result, both the metal reeds come into contact with each other, thereby completing an electrical circuit. The water level detector 11 transmits an electrical signal flowed at this time, in other words, a reach signal to the notification device of the main controller 32, and upon receipt of the reach signal, the notification device displays the above-mentioned notification of drainage on the monitor 33. The cab 7 also has a water level sensor switch 34 for powering up the water level detector 11, and this water level sensor switch 34 is connected to the main controller 32. When the operator in the cab 7 closes the water level sensor switch 34, a water level sensor switch signal is outputted to the main controller 32.

The first embodiment of the present invention is further provided with an operation determination device and a notification control device. The operation determination device determines whether or not the working machine 1 is in operation. The notification control device performs control that disables a notifying function of the notification device when the hydraulic excavator 1 has been determined to be in operation by the operation determination device but enables the notifying function of the notification device when the hydraulic excavator 1 has been determined to be out of operation by the operation determination device. These operation determination device and notification control device are integrated in the main controller 32.

Inthefirst embodiment of the present invention, the operation determination device is configured to determine the hydraulic excavator 1 to be in operation when the key signal has been outputted by the key signal output device 30 and the rpm of the engine as measured by the engine rpm measurement device 31 has increased beyond the predetermined value, for example, 1,000 rpm but determines the hydraulic excavator 1 to be out of operation when the key signal has been outputted by the key signal output device 30 and the rpm of the engine has decreased to or beyond the predetermined value, for example, 1,000 rpm.

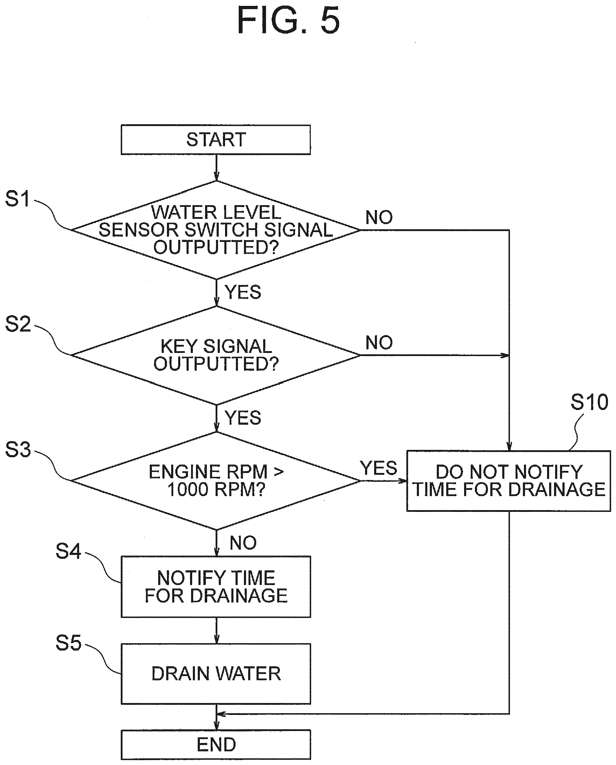

Operation of the first embodiment of the present invention will next be described based on a flow chart of FIG. 5.

FIG. 5 is the flow chart that describes the operation of the first embodiment of the present invention.

Inthefirst embodiment of the present invention, the water level sensor switch 34 in the cab 7 is first open as illustrated in FIG. 5 so that no water level sensor switch signal is outputted [step (hereinafter referred to as "S") 1]. No notification of drainage is, therefore, displayed on the monitor 33 by the notification device even if the level of the water 17 in the water separator 10 reaches the predetermined height (S10).

When the operator sitting in the cab 7 closes the water level sensor switch 34 here, a water level sensor switch signal is outputted (S1). If the operator has not manipulated yet the input key at this time, no key signal has been outputted by the key signal output device 30 (S12). As the monitor 33 has not been powered up accordingly, no notification of drainage is displayed on the monitor 33 by the notification device even if the level of the water 17 in the water separator 10 reaches the predetermined height and a reach signal is transmitted to the main controller 32 (S10), and the operation of the first embodiment of the present invention comes to an end.

When the operator manipulates the input key to switch on the key signal output device after the output of a water level sensor switch signal in step S1, on the other hand, a key signal is outputted by the key signal output device 30 (S2). Next, the operation determination device determines whether or not the rpm of the engine as measured by the engine rpm measurement device 31 is higher than 1,000 rpm (S3). When the operation determination device determines the rpm of the engine to be higher than 1,000 rpm at this time, the operator has already switched on the starter by the input key to start up the engine and has already been performing work such digging. The hydraulic exactor 1 is, therefore, determined to be in operation. As the notification control device then disables the notifying function of the notification device, no notification of drainage is displayed on the monitor 33 by the notification device even if the level of the water 17 in the water separator 10 reaches the predetermined height and a reach signal is transmitted to the main controller 32 (S10), and the operation of the first embodiment of the present invention comes to an end.

When the operation determination device determines in step S3 that the rpm of the engine is not higher than 1,000 rpm, for example, 0 rpm which is lower than 1,000 rpm, on the other hand, the operator has not switched on the starter by the input key, and the engine has not been started up by the starter. The hydraulic excavator 1 can, therefore, be determined to be out of operation. When the operation determination device determines the rpm of the engine to be, for example, 1,000 rpm or lower but higher than 0 rpm in step S3, the operator has already switched on the starter by the input key to start up the engine but the engine is in an idle state. The hydraulic excavator 1 is, therefore, determined to be out of operation.

As the notification control device then enables the notifying function of the notification device, a notification of drainage is displayed on the monitor 33 by the notification device when the level of the water 17 in the water separator 10 reaches the predetermined height and a reach signal is transmitted to the main controller 32 (S4). Upon visual recognition of the notification of drainage on the monitor 33, the operator in the cab 7 opens the drain groove 19 of the water separator 10 to drain the water 17 from the water separator 10 (S5), and the operation of the first embodiment of the present invention comes to an end.

According to the first embodiment of the present invention configured as described above, the water separator 10 and water level detector 11 vibrate when the operator in the cab 7 performs work such as digging by manipulating the control levers 43,44 to tilt or pivot the boom 4A, arm 4B and bucket 4C and the body receives impacts as a result of the work. At this time, even if the reed switch 12a is actuated by the vibrations and a reach signal is transmitted to the main controller 32, the hydraulic excavator 1 is determined by the operation determination device to be in operation in step S3 and the notifying function of the notification device is disabled by the notification control device. It is, therefore, possible to prevent malfunction that a notification of drainage would otherwise be displayed on the monitor 33. As a consequence, the operator is not confused as to the time for drainage of water from the water separator 10 even if the operator watches the monitor 33 when the level of water in the water separator 10 has not reached the predetermined height. It is, accordingly, possible to avoid the operator from recognizing that the notification of drainage displayed on the monitor 33 is due to malfunction.

When the work such as digging is stopped, on the other hand, vibrations of the water separator 10 and water level detector 11 inside the body subside. As hydraulic excavator 1 is determined by the operation determination device to be out of operation at this time in step S3, the notifying function of the notification device is enabled by the notification control device. Therefore, the notification device can receive a reach signal and can display a notification of drainage on the monitor 33, and from the monitor 33, the operator can surely become aware of a time for drainage of water from the water separator 10. By performing the control of the notifying function of the notification device by the notification control device on the basis of the state of operation of the hydraulic excavator 1 as determined by the operation determination device as described above, the operator can appropriately become aware of the time for drainage of water from the water separator 10 even without adding a new member into the water separator 10. As a consequence, the notification device can be assured to have high reliability.

Inthefirst embodiment of the present invention, the float 14 is allowed to float at the boundary interface between the fuel 18 and the water 17 by making use of the difference in specific gravity between the fuel 18 and the water 17. When the level of the water 17 in the water separator 10 has reached the predetermined height, the reed switch 12a is actuated by the magnet 15 inside the float 14 guided by the guide 12 as a result of the rise of the water 17 and a reach signal is hence outputted to the notification device. Upon receipt of this reach signal, the notification device can, therefore, notify the time for drainage of water from the water separator 10. Even if the float 14 vibrates and rises relative to the guide 12 as a result of vibrations of the body or the float 14 rises due to a variation in the level of water in the water separator 10 while the hydraulic excavator 1 is in operation, the notifying function of the notification device can, therefore, be performed with high accuracy because the notification control device performs control to disable the notifying function of the notification device in step S3 and the effects of the rise of the float 14 as a result of the vibrations of the body can be lessened accordingly.

Inthefirst embodiment of the present invention, when the hydraulic excavator 1 is in operation, as a result, for example, of tilt or pivotal operation of the boom 4A, arm 4B and bucket 4C or hitting of the bucket 4C against a rock, the load on the engine becomes greater and the rpm of the engine increases beyond 1,000 rpm. When the hydraulic excavator 1 is out of operation, on the other hand, the engine is in either shut-down state or an idle state so that the rpm of the engine decreases to 1,000 rpm or lower. In the first embodiment of the present invention, the upperstructure 3 is provided with the key signal output device 30 and engine rpm measurement device 31. The operation determination device can, therefore, make a reasonable determination as to the state of operation of the hydraulic excavator 1, including the idle state of the engine, by considering, in step S2, whether or not the key signal has been outputted, and in step S3, whether or not the rpm of the engine is higher than 1,000 rpm.

### Second Embodiment

The second embodiment of the present invention is different from the above-described first embodiment in that in the first embodiment, the operation determination device determines, based on the key signal outputted by the key signal output device 30 and the rpm of the engine as measured by the engine rpmmeasurement device 31, whether or not the hydraulic excavator 1 is in operation while in the second embodiment, the operation determination device has an unillustrated control lever state detection device for detecting, for example, the states of the control levers 43,44 and determines the hydraulic excavator 1 to be in operation when the neutral states of the control levers 43,44 are not detected by the control lever state detection device but determines the hydraulic excavator 1 to be out of operation when the neutral states of the control levers 43, 44 are detected by the control lever state detection device. The remaining configuration is the same as that in the first embodiment.

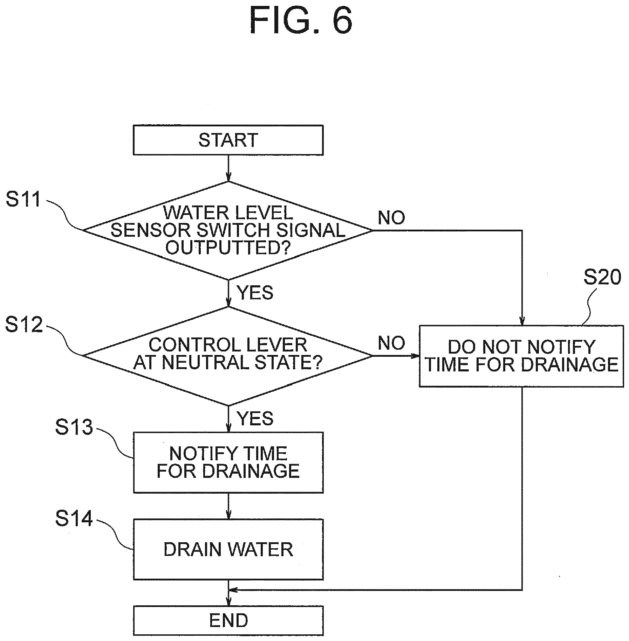

Operation of the second embodiment of the present invention will next be described based on a flow chart of FIG. 6.

FIG. 6 is the flow chart that describes the operation of the second embodiment of the present invention.

In the second embodiment of the present invention, the water level sensor switch 34 in the cab 7 is first open as illustrated in FIG. 6 so that no water level sensor switch signal is outputted (S11). No notification of drainage is, therefore, displayed on the monitor 33 by the notification device even if the level of the water 17 in the water separator 10 reaches the predetermined height (S20).

When the operator sitting in the cab 7 closes the water level sensor switch 34 here, a water level sensor switch signal is outputted (S11). When the operator manipulates the input key to switch on the key signal output device 30 and starter, the engine is started up. The operation determination device then determines whether or not the neutral states of the control levers 43,44 have been detected by the control lever state detection device (S12).

When the neutral states of the control levers 43, 44 are not determined to have been detected at this time, the operator is manipulating the control levers 43,44 and is performing work by tilting or pivoting the boom 4A, arm 4B and bucket 4C. The operation determination device, therefore, determines the hydraulic excavator 1 to be in operation. As the notification control device then disables the notifying function of the notification device, no notification of drainage is displayed on the monitor 33 by the notification device even if the level of the water 17 in the water separator 10 reaches the predetermined height and a reach signal is transmitted to the main controller 32 (S20), and the operation of the second embodiment of the present invention comes to an end.

When the neutral states of the control levers 43,44 are determined to have been detected in step S12, the operator is not manipulating the control levers 43,44, and the boom 4A, arm 4B and bucket 4C are not operated. The operation determination device, therefore, determines the hydraulic excavator 1 to be out of operation. As the notification control device then enables the notifying function of the notification device, a notification of drainage is displayed on the monitor 33 by the notification device when the level of the water 17 in the water separator 10 reaches the predetermined height and a reach signal is transmitted to the main controller 32 (S13). Upon visual recognition of the notification of drainage on the monitor 33, the operator in the cab 7 opens the drain groove 19 of the water separator 10 to drain the water 17 from the water separator 10 (S14), and the operation of the second embodiment of the present invention comes to an end.

According to the second embodiment of the present invention configured as described above, the operation determination device has the control lever state detection device for detecting the states of the control levers 43,44. By determining in step S12 whether or not the neutral states of the control levers 43,44 have been detected by the control lever state detection device, it is, therefore, possible to easily grasp whether or not work is being performed by tilting or pivoting the boom 4A, arm 4B and bucket 4C. Accordingly, the operation determination device can easily specify the state of operation of the hydraulic excavator 1 by the control lever state detection device.

### Third Embodiment

The third embodiment of the present invention is different from the above-described first embodiment in that in the first embodiment, the operation determination device determines, based on the key signal outputted by the key signal output device 30 and the rpm of the engine as measured by the engine rpmmeasurement device 31, whether or not the hydraulic excavator 1 is in operation while in the third embodiment, the operation determination device has a lock lever state detection device for detecting, for example, a state of the lock lever 50, and determines the hydraulic excavator 1 to be in operation when a locking state of the lock lever 50 is not detected by the lock lever state detection device but determines the hydraulic excavator 1 to be out of operation when the locking state of the lock lever 50 is detected by the lock lever state detection device. The remaining configuration is the same as that in the first embodiment.

Operation of the third embodiment of the present invention will next be described based on a flow chart of FIG. 7.

FIG. 7 is the flow chart that describes the operation of the third embodiment of the present invention.

In the third embodiment of the present invention, the water level sensor switch 34 in the cab 7 is first open as illustrated in FIG. 7 so that no water level sensor switch signal is outputted (S21). No notification of drainage is, therefore, displayed on the monitor 33 by the notification device even if the level of the water 17 in the water separator 10 reaches the predetermined height (S30).

When the operator sitting in the cab 7 closes the water level sensor switch 34 here, a water level sensor switch signal is outputted (S21). When the operator manipulates the input key to switch on the key signal output device 30 and starter, the engine is started up. The operation determination device then determines whether or not the locking state of the lock lever has been detected by the lock lever state detection device (S22).

When the locking state of the lock lever 50 is not determined to have been detected at this time, the operator can operate the boom 4A, arm 4B and bucket 4C by manipulating the control levers 43,44. The operation determination device, therefore, determines the hydraulic excavator 1 to be in operation. As the notification control device then disables the notifying function of the notification device, no notification of drainage is displayed on the monitor 33 by the notification device even if the level of the water 17 in the water separator 10 reaches the predetermined height and a reach signal is transmitted to the main controller 32 (S30), and the operation of the third embodiment of the present invention comes to an end.

When the locking state of the lock lever 50 is determined to have been detected in step S22, on the other hand, the functions of the control levers 43,44 are disabled so that, even if the operator manipulates the control levers 43, 44, the boom 4A, arm 4B and bucket 4C are not operable. The operation determination device, therefore, determines the hydraulic excavator 1 to be in operation. As the notification control device then enables the notifying function of the notification device, a notification of drainage is displayed on the monitor 33 by the notification device when the level of the water 17 in the water separator 10 reaches the predetermined height and a reach signal is transmitted to the main controller 32 (S23). Upon visual recognition of the notification of drainage on the monitor 33, the operator in the cab 7 opens the drain groove 19 of the water separator 10 to drain the water 17 from the water separator 10 (S24), and the operation of the third embodiment of the present invention comes to an end.

According to the third embodiment of the present invention configured as described above, the operation determination device has the lock lever position detection device for detecting the state of the lock lever 50. By determining in step S22 whether or not the locking state of the lock lever 50 has been detected by the lock lever state detection device, it is, therefore, possible to easily grasp whether or not work can be performed by tilting or pivoting the boom 4A, arm 4B and bucket 4C. Accordingly, the operation determination device can easily specify the state of operation of the hydraulic excavator 1 by the lock lever state detection device.

### Legend

- 1: Hydraulic excavator
- 2: Travel base
- 3: Upperstructure
- 4: Front working device (working attachment)
- 4A: Boom
- 4a: Boom cylinder
- 4B: Arm
- 4b: Arm cylinder
- 4C: Bucket
- 4c: Bucket cylinder
- 7: Cab
- 10: Water separator
- 11: Water level detector
- 12: Guide
- 12a: Reed switch
- 13: Stopper
- 14: Float
- 15: Magnet
- 17: Water
- 18: Fuel
- 19: Drain groove
- 30: Key signal output device
- 31: Engine rpm measurement device
- 32: Main controller
- 33: Monitor
- 34: Water level sensor switch
- 40: Operator's seat
- 43, 44: Control levers
- 47: Floor section
- 50: Lock lever

## Claims

1. A working machine (1) provided with a water separator (10) formed at a part of a feed line connected to an engine and a fuel tank to separate fuel (18), which is flowing through the feed line, and water (17), which is contained in the flowing fuel (18), from each other, a water level detector (11) for detecting a level of water (17) separated by the water separator (10), and a notification device (32) for making a notification when the level of water (17) as detected by the water level detector (11) has reached a predetermined height,
**characterized by**
an operation determination device (32) for determining whether or not the working machine (1) is in operation; and
a notification control device (32) for performing control to disable a notifying function of the notification device (32) when the working machine (1) has been determined to be in operation by the operation determination device (32) but to enable the notifying function of the notification device (32) when the working machine (1) has been determined to be out of operation by the operation determination device (32).

2. The working machine (1) according to claim 1, wherein the water level detector (11) has:
a float (14) having a specific gravity set higher than fuel (18) but lower than water (17) such that the float (14) is allowed to float at a boundary interface between the fuel (18) and water (17) in the water separator (10),
a guide (12) for guiding the float (14) in a vertical direction, and
an output device for outputting a reach signal to the notification device (32) from the float (14), which has been guided by the guide (12), as an origin when the level of water (17) in the water separator (10) has reached the predetermined height.

3. The working machine (1) according to claim 1 or 2, wherein:
the working machine (1) further comprises a key signal output device (30) for outputting a key signal to enable a start-up of the engine, and an engine rpm measurement device (31) for measuring an rpm of the engine; and
the operation determination device (32) determines the working machine (1) to be in operation when the key signal has been outputted by the key signal output device (30) and the rpm of the engine as measured by the engine rpm measurement device (31) has increased beyond a predetermined value but determines the working machine (1) to be out of operation when the key signal has been outputted by the key signal output device (30) and the rpm of the engine has decreased to or beyond the predetermined value.

4. The working machine (1) according to claim 1 or 2, wherein:
the working machine (1) further comprises a working attachment (4), and a control lever (43, 44) for controlling the working attachment (4); and
the operation determination device (32) has a control lever state detection device (32) for detecting a state of the control lever (43, 44), and determines the working machine (1) to be in operation when a neutral state of the control lever (43, 44) is not detected by the control lever state detection device (32) but determines the working machine (1) to be out of operation when the neutral state of the control lever (43, 44) is detected by the control lever state detection device (32).

5. The working machine (1) according to claim 1 or 2, wherein:
the working machine (1) further comprises a working attachment (4), a control lever (43, 44) for controlling the working attachment (4), and a lock lever (50) for disabling a function of the control lever (43, 44); and
the operation determination device has a lock lever state detection device (32) for detecting a state of the lock lever (50), and determines the working machine (1) to be in operation when a locking state of the lock lever (50) is not detected by the lock lever state detection device (32) but determines the working machine (1) to be out of operation when the locking state of the lock lever (50) is detected by the lock lever state detection device (32).

## Patentansprüche

1. Arbeitsmaschine (1) mit einem Wasserabscheider (10), ausgebildet als ein Teil einer Versorgungsleitung, die mit einem Motor und einem Kraftstofftank verbunden ist zum Trennen von Kraftstoff (18), welcher durch die Versorgungsleitung fließt, und Wasser (17), welches in dem fließenden Kraftstoff (18) enthalten ist, voneinander, mit einem Wasserpegeldetektor (11) zum Erfassen eines Pegels von Wasser (17), das durch den Wasserabscheider (10) abgeschieden wurde, und mit einer Anzeigevorrichtung (32), die eine Anzeige erzeugt, wenn der von dem Wasserpegeldetektor (11) erfasste Pegel des Wassers (17) eine vorbestimmte Höhe erreicht hat, **gekennzeichnet durch**
eine Betriebserfassungsvorrichtung (32) zum Bestimmen, ob die Arbeitsmaschine (1) in Betrieb ist oder nicht, und
eine Anzeigesteuervorrichtung (32) zur Durchführung einer Steuerung zum Ausschalten einer Anzeigefunktion der Anzeigevorrichtung (32), wenn **durch** die Betriebserfassungsvorrichtung (32) bestimmt wurde, dass die Arbeitsmaschine (1) in Betrieb ist, und zum Einschalten der Anzeigefunktion der Anzeigevorrichtung (32), wenn **durch** die Betriebserfassungsvorrichtung (32) erfasst wurde, dass die Arbeitsmaschine (1) außer Betrieb ist.

2. Arbeitsmaschine (1) nach Anspruch 1, wobei der Wasserpegeldetektor (11) aufweist:
einen Schwimmer (14) mit einem spezifischen Gewicht, das höher festgelegt ist als das spezifische Gewicht des Kraftstoffs (18) und das niedriger festgelegt ist als das spezifische Gewicht von Wasser (17), derart, dass der Schwimmer (14) an einer Grenzfläche zwischen dem Kraftstoff (18) und dem Wasser (17) in dem Wasserabscheider (10) schwimmen kann,
eine Führung (12) zum Führen des Schwimmers (14) in vertikaler Richtung, und
eine Ausgabevorrichtung zum Ausgeben eines Erreichungssignals an die Anzeigevorrichtung (32) von dem Schwimmer (14), der von der Führung (12) geführt wurde, wenn der Pegel des Wassers (17) in dem Wasserabscheider (10) eine vorbestimmte Höhe erreicht hat.

3. Arbeitsmaschine (1) nach Anspruch 1 oder 2, wobei:
die Arbeitsmaschine (1) ferner eine Tastensignal-Ausgabevorrichtung (30) aufweist zur Ausgabe eines Tastensignals zum Starten des Motors, und eine Motordrehzahl-Messvorrichtung (31) zum Messen einer Drehzahl des Motors, und
die Betriebserfassungsvorrichtung (32) bestimmt, dass die Arbeitsmaschine (1) in Betrieb ist, wenn das Tastensignal von der Tastensignal-Ausgabevorrichtung (30) ausgegeben wurde und die von der Motordrehzahl-Messvorrichtung (31) gemessene Drehzahl über einen vorbestimmten Wert gestiegen ist, und bestimmt, dass die Arbeitsmaschine (1) außer Betrieb ist, wenn das Tastensignal von der Tastensignal-Ausgabevorrichtung (30) ausgegeben wurde und die Drehzahl des Motors auf den vorbestimmten Wert oder darunter gesunken ist.

4. Arbeitsmaschine (1) nach Anspruch 1 oder 2, wobei:
die Arbeitsmaschine (1) ferner eine Arbeitsausrüstung (4) und einen Steuerhebel (43, 44) zum Steuern der Arbeitsausrüstung (4) aufweist, und
die Betriebserfassungsvorrichtung (32) eine Steuerhebelzustandserfassungsvorrichtung (32) aufweist zum Erfassen des Zustands des Steuerhebels (43, 44), und die Betriebserfassungsvorrichtung (32) erfasst, dass die Arbeitsmaschine (1) in Betrieb ist, wenn eine neutrale Stellung des Steuerhebels (43, 44) durch die Steuerhebelzustandserfassungsvorrichtung (32) nicht erfasst wurde, und bestimmt, dass die Arbeitsmaschine (1) außer Betrieb ist, wenn durch die Steuerhebelzustandserfassungsvorrichtung (32) die neutrale Stellung des Steuerhebels (43, 44) erfasst wurde.

5. Arbeitsmaschine (1) nach Anspruch 1 oder 2, wobei:
die Arbeitsmaschine (1) ferner eine Arbeitsausrüstung (4), einen Steuerhebel (43, 44) zum Steuern der Arbeitsausrüstung (4) und einen Rasthebel (50) aufweist zum Außerbetriebsetzen einer Funktion des Steuerhebels (43, 44), und
die Betriebserfassungsvorrichtung eine Rasthebelzustandserfassungsvorrichtung (32) zum Erfassen eines Zustands des Rasthebels (50) aufweist, und bestimmt, dass die Arbeitsmaschine (1) in Betrieb ist, wenn ein verrasteter Zustand des Rasthebels (50) durch die Rasthebelzustandserfassungsvorrichtung (32) nicht erfasst wurde, und bestimmt, dass die Arbeitsmaschine (1) außer Betrieb ist, wenn der verrastete Zustand des Rasthebels (50) durch die Rasthebelzustandserfassungsvorrichtung (32) erfasst wurde.

## Revendications

1. Engin (1) de chantier prévu avec un séparateur (10) d'eau formé en une partie d'une ligne d'alimentation connectée à un moteur et un réservoir de carburant pour séparer le carburant (18), qui s'écoule à travers la ligne d'alimentation, et l'eau (17), qui est contenue dans le carburant (18) qui s'écoule, l'un de l'autre, un détecteur (11) de niveau d'eau pour détecter un niveau de l'eau (17) séparée par le séparateur (10) d'eau, et un dispositif (32) de notification pour effectuer une notification lorsque le niveau de l'eau (17) tel que détecté par le détecteur (11) de niveau d'eau a atteint une hauteur prédéterminée, **caractérisé par**
un dispositif (32) de détermination de fonctionnement pour déterminer si l'engin (1) de chantier est ou non en fonctionnement ; et
un dispositif (32) de commande de notification pour exécuter une commande pour désactiver une fonction de notification du dispositif (32) de notification lorsque l'engin (1) de chantier a été déterminé être en fonctionnement par le dispositif (32) de détermination de fonctionnement, mais pour activer la fonction de notification du dispositif (32) de notification lorsque l'engin (1) de chantier a été déterminé être hors fonctionnement par le dispositif (32) de détermination de fonctionnement.

2. Engin de chantier selon la revendication 1, dans lequel le détecteur (11) de niveau d'eau a :
un flotteur (14) ayant une densité relative fixée supérieure à celle du carburant (18) mais inférieure à celle de l'eau (17), de telle sorte que le flotteur (14) est laissé flotter à une interface entre le carburant (18) et l'eau (17) dans le séparateur (10) d'eau,
un guide (12) pour guider le flotteur (14) dans un sens vertical, et
un dispositif de sortie pour délivrer en sortie un signal d'atteinte au dispositif (32) de notification provenant du flotteur (14), qui a été guidé par le guide (12), comme une origine lorsque le niveau de l'eau (17) dans le séparateur (10) d'eau a atteint la hauteur prédéterminée.

3. Engin de chantier selon la revendication 1 ou 2 dans lequel :
l'engin (1) de chantier comprend en outre un dispositif (30) de délivrance en sortie de signal de clé pour délivrer en sortie un signal de clé pour permettre un démarrage du moteur, et un dispositif (31) de mesure de régime moteur pour mesurer un régime du moteur ; et
le dispositif (32) de détermination de fonctionnement détermine que l'engin (1) de chantier est en fonctionnement lorsque le signal de clé a été délivré en sortie par le dispositif (30) de délivrance en sortie de signal de clé et que le régime du moteur tel que mesuré par le dispositif (31) de mesure de régime moteur a augmenté au-delà d'une valeur prédéterminée, mais détermine que l'engin (1) de chantier est hors fonctionnement lorsque le signal de clé a été délivré en sortie par le dispositif (30) de délivrance en sortie de signal de clé et que le régime du moteur a diminué à la ou au-delà de la valeur prédéterminée.

4. Engin de chantier selon la revendication 1 ou 2 dans lequel :
l'engin (1) de chantier comprend en outre un accessoire de travail (4), et un levier (43, 44) de commande pour commander l'accessoire de travail (4) ; et
le dispositif (32) de détermination de fonctionnement a un dispositif (32) de détection d'état de levier de commande pour détecter un état du levier (43, 44) de commande, et détermine que l'engin (1) de chantier est en fonctionnement lorsqu'un état de point mort du levier (43, 44) de commande n'est pas détecté par le dispositif (32) de détection d'état de levier de commande, mais détermine que l'engin (1) de chantier est hors fonctionnement lorsque l'état de point mort du levier (43, 44) de commande est détecté par le dispositif (32) de détection d'état de levier de commande.

5. Engin de chantier selon la revendication 1 ou 2 dans lequel :
l'engin (1) de chantier comprend en outre un accessoire de travail (4), un levier (43, 44) de commande pour commander l'accessoire de travail (4), et un levier (50) de verrouillage pour désactiver une fonction du levier (43, 44) de commande ; et
le dispositif de détermination de fonctionnement a un dispositif (32) de détection d'état de levier de verrouillage pour détecter un état du levier (50) de verrouillage, et détermine que l'engin (1) de chantier est en fonctionnement lorsqu'un état de verrouillage du levier (50) de verrouillage n'est pas détecté par le dispositif (32) de détection d'état de levier de verrouillage, mais détermine que l'engin (1) de chantier est hors fonctionnement lorsque l'état de verrouillage du levier (50) de verrouillage est détecté par le dispositif (32) de détection d'état de levier de verrouillage.
